# EUROPÄISCHE PATENTSCHRIFT

(11) **EP 0 674 664 B1**
(45) Veröffentlichungstag und Bekanntmachung des Hinweises auf die Patenterteilung: **07.10.1998**
(21) Anmeldenummer: 94901953.3
(22) Anmeldetag: 03.12.1993
(51) Int. Cl.: C08F 2/46, B01J 19/12

(54) **VERFAHREN ZUR VERNETZUNG VON HAFTKLEBERN DURCH EINSATZ VON LASERN**
METHOD OF CROSS-LINKING CONTACT ADHESIVES BY MEANS OF LASERS
PROCEDE DE RETICULATION DE COLLES CONTACT A L'AIDE DE LASERS

(30) Priorität: 21.12.1992 DE 4243270
(43) Veröffentlichungstag der Anmeldung: 04.10.1995
(73) Patentinhaber: Lohmann GmbH & Co. KG, 56567 Neuwied (DE)
(72) Erfinder: BLUM, Walter, D-56567 Neuwied (DE); CZECH, Zbigniew, D-56566 Neuwied (DE); HERRMANN, Fritz, D-56567 Neuwied (DE)
(74) Vertreter: Flaccus, Rolf-Dieter, Dr.
(86) Internationale Anmeldenummer: EP9303398
(87) Internationale Veröffentlichungsnummer: WO9414853

(56) Entgegenhaltungen:
- EP-A- 0 109 291
- EP-A- 0 378 144
- EP-A- 0 380 938
- WO-A-93/20112
- DATABASE WPI Week 9305, Derwent Publications Ltd., London, GB; AN 93-042602 & JP,A,4 370 123 (NITTO DENKO) 22. Dezember 1992

## Beschreibung

Die Erfindung betrifft ein Verfahren zur Vernetzung von Haftschmelzklebern in flächiger Verteilung mittels radikalischer Reaktion von eingebauten photopolymerisationsfähigen Gruppen mit Hilfe von Ultraviolett-Strahlen im Bereich von 180-400 nm.

Als Haftkleber wird eine bestimmte Kategorie von Klebern bezeichnet, die in trockenem (lösemittelfreien) Zustand bei Zimmertemperatur aggressiv und dauerhaft klebrig sind und bei direktem Kontakt auf einer Vielzahl von verschiedensten Oberflächen haften, wobei der leichte Druck eines Fingers genügt. Eine Aktivierung durch Feuchtigkeit, Lösemittel oder Wärme ist nicht erforderlich. Die Anwendung dieser Haftkleber ist weit verbreitet und sie werden bevorzugt zur Herstellung von diversen selbstklebenden Artikeln eingesetzt, z.B. für Klebebänder und -folien, Selbstklebeetiketten, Aufkleber, Pflaster, Briefmarken.

Basispolymere der modernen Haftkleber sind vorwiegend Polyacrylate, Natur- und Synthese-Kautschuke, Polyester, Polychloropren, Polyisobutene, Polyvinylether, Polyurethane und Silicone, die oft in Kombination mit Zusatzstoffen wie beispielsweise Harzen, Weichmachern, Füllstoffen und/oder Stabilisatoren eingesetzt werden. Die Haftkleber fallen in den meisten Fällen als Ergebnis einer Polymerisation in Lösung oder Dispersion an, wobei deren fließfähige Konsistenz Voraussetzung für die weitere Verarbeitung ist. Nach flächiger Verteilung auf dem gewünschten Substrat ergibt sich allerdings die Notwendigkeit, die Löse- oder Dispergiermittel zu entfernen, was in der Regel durch Zufuhr von Wärme und/oder Erzeugung von Unterdruck bewerkstelligt wird, wozu teure Trocknungsstrecken und Absauganlagen erforderlich sind. Zusätzlich treten Kosten durch Wiedergewinnung oder Abscheidung der Lösemittel auf, um Umweltbelastung zu vermeiden. Daneben stellt die Brennbarkeit der meisten Lösemittel ein zusätzliches Risiko dar. Darüberhinaus sind die meisten organischen Lösemittel schädlich für den menschlichen Organismus, so daß aufwendige Schutzmaßnahmen für die im Betrieb tätigen Personen getroffen werden müssen.

Diese Nachteile können nur durch Ausschluß von Löse- und Dispergiermittel vermieden werden. Eine Möglichkeit dazu bietet die Verwendung von Haftschmelzklebern, die lösemittelfrei in der Schmelze aus geeigneten Polymeren und eventuellen Zusätzen formuliert und anschließend aus der Schmelze flächig verteilt werden. Sie besitzen im Gegensatz zu den klassischen Hotmelts bei Zimmertemperatur Haftklebeeigenschaften.

Diese Haftschmelzkleber, deren Polymerketten meistens nur physikalisch quervernetzt sind, sind kaum kohäsiv belastbar. Ihnen fehlt die in der Praxis unerläßliche hohe thermisch-mechanische innere Festigkeit.

Um dieses Manko zu beheben, werden während der Polymerisation mehrfunktionelle Comonomere, die zu einer Vernetzung geeignet sind, eingesetzt. Dieses Verfahren ist aber meistens nur in einer endgültigen Breitbahn-Form möglich, wobei es aufgrund der hohen Viskosität zu Verarbeitungsschwierigkeiten kommt.

Eine andere Möglichkeit ist eine Zugabe von mehrfunktionellen photopolymerisationsfähigen Comonomeren zum Haftschmelzkleber, seine flächige Verteilung und anschließend eine Strahlenvernetzung. Dieses Verfahren führte jedoch nicht zur erwünschten Kohäsionsverbesserung.

Ein anderes Verfahren ist die Zugabe von Vernetzern, die dem Haftschmelzkleber aufgrund der Reaktion über die an der Polymerkette vorhandenen funktionellen Carboxyl- oder Hydroxylgruppen eine verbesserte Kohäsion verleihen. Ein vorzeitiges Gelieren der auf diesem Wege modifizierten Haftkleber oder die hohe erforderliche, meistens oberhalb 150°C liegende Vernetzungstemperatur, erschweren eine Umsetzung in der Praxis.

Eine andere Möglichkeit der Kohäsionssteigerung der Haftschmelzkleber ist die radikalische Vernetzung über die wenigen freien Doppelbindungen, die statistisch in der Polymerkette verteilt sind. Dies kann durch Einwirkung von UV- oder Elektronenstrahlen bewerkstelligt werden. Die dadurch erzielte Qualitätssteigerung wird aber nicht den Anforderungen der Praxis gerecht ("A survey of the field or radiation cured PSA's", R.W.Oehmke, AFERA-Jahrestagung 1991 in Amsterdam).

Es sind schon UV-härtbare Haftschmelzklebstoffsysteme bekannt, die aber die Anforderungen der Praxis in puncto thermischer Belastbarkeit und Kohäsion unter Berücksichtigung akzeptabler Produktionsgeschwindigkeiten nicht erfüllen konnten. Die dabei notwendige UV-Bestrahlungszeit liegt oft im Minutenbereich.

DE-OS 2 411 169 beschreibt, daß zum Erreichen einer akzeptablen Kohäsion eine UV-Bestrahlungszeit zwischen 1 und 2 Minuten benötigt wird.

Wie der EP 0 417 564 zu entnehmen ist, erreichen mit einer UV-Lampe bestrahlte Haftklebemassen nach 15 s UV-Wirkung kein akzeptables Eigenschaftsniveau.

Der Erfindung liegt daher die Aufgabe zugrunde, die zum Erreichen der angestrebten Kohäsion benötigte Bestrahlungszeit so zu verkürzen, daß erhöhte Produktionsgeschwindigkeiten ermöglicht werden.

Es ist weiter Ziel der vorliegenden Erfindung, ein Verfahren zur Vernetzung von Haftschmelzklebern mittels Laserstrahlen vorzuschlagen, das im Hinblick auf die Adhäsion und Kohäsion hervorragende Eigenschaften bewirkt und sich zur Herstellung von selbstklebenden Bändern, Etiketten, Folien oder Pflastern eignet.

Diese Aufgabe wurde gelöst durch ein Verfahren zur Vernetzung von Haftschmelzklebern in flächiger Verteilung durch die radikalische Reaktion von eingebauten photopolymerisationsfähigen Gruppen mit Hilfe von Ultraviolett-Strahlen im Bereich 180-400 nm, bei dem die zur Vernetzungsreaktion erforderliche Energie durch monochromatische Strahlung eines Lasers zugeführt wird.
Die bei dem Verfahren notwendigen Reaktionszeiten zur Vernetzung von Haftschmelzklebern liegen im Bereich 0,01 bis 2 Sekunden, was eine ökonomisch sinnvolle Produktionsgeschwindigkeit möglich macht.
Damit gelingt es durch Einsatz von Lasern, in den zu vernetzenden Haftschmelzkleber bei einer monochromatischen Wellenlänge in einem Maße Energie einzustrahlen, wie es bei Verwendung konventioneller UV-Lampen nicht gegeben ist. Da andererseits die Geschwindigkeit der Vernetzung unter anderem von der Höhe dieser Initialenergie abhängt, stellt die Laser-Vernetzung ein Verfahren zur Vernetzung von Haftschmelzklebern dar, das bezüglich der technologischen Umsetzung die Nachteile des Stands der Technik überwindet.

Die erfindungsgemäß einzusetzenden Laser geben ihre Strahlen im Wellenlängenbereich von 180 bis 400 nm ab. Ihre Energieabgabe ist dabei kontinuierlich oder geschieht in gepulster Form. Als kontinuierliche Laser sind beispielsweise die Ionen-Krypton/Argon-Laser (ca. 350 nm) und der Ionen-Helium-Cadmium-Laser (325 nm) zu nennen. Die gepulsten Laser genießen jedoch den Vorzug, da sie höhere Impulsleistungen liefern. Zu ihnen gehören beispielsweise die sogenannten Excimer-Laser, die vornehmlich mit Fluor oder Edelgashalogengemischen betrieben werden. Als typische Vertreter seien die ArF-(193 nm)-, KrF-(248 nm)-, XeCl(308 nm)- und XeF-(351 nm)-Laser genannt. Auch Festkörper-Laser Können eingesetzt werden, wie der gepulste Nd : YAG-Laser, dessen Emission durch Frequenzverdoppelung in den UV-Bereich (266 und 365 nm) verschoben werden kann. Eine weiterführende Tabelle über Gas-Laser im Bereich 180-400 nm ist im "Handbook of Laser Science and Technology" Vol.2, Seite 497-500, CRC Press, Boca Raton 1985, enthalten, auf die hier ausdrücklich Bezug genommen wird. Die oben angegebenen Zahlen in Klammern stellen die jeweilige Emissionswellenlänge dar. Die Pulsdauer bei diesen Laser-Typen liegt im Bereich unterhalb von 50 milliardstel Sekunden (50 Nanosekunden), wobei Pulsfolgefrequenzen bis zu mehreren Hundert Hz einstellbar sind. Die Gesamtzahl der emittierten Pulse ist programmierbar. Die mittlere Leistung dieser Laser kann bei Werten bis zu 100 Watt liegen. Im Pulsbetrieb werden allerdings Leistungen von ca. 20 Megawatt erreicht, woraus sich Leistungsdichten von über einem Gigawatt pro Quadratzentimeter (10⁹ Watt/cm²) ergeben. Die erreichbare Pulsenergie ist mit mehreren Hundert mJoule um ein Vielfaches höher als die Strahlungsenergie einer UV-Lampe bei der entsprechenden Wellenlänge. Die in diesem Zusammenhang für UV-Lampen angegebenen Energiewerte beziehen sich immer auf den gesamten Spektralbereich und nicht auf eine einzelne Wellenlänge.

Die nach dem erfindungsgemäßen Verfahren vernetzbaren HaftSchmelzkleber werden aus olefinisch ungesättigten Monomeren gebildet, die vorzugsweise aus der Familie der Acrylate stammen, wobei mit dieser Bezeichnung die Acrylsäure und alle Derivate gemeint sind, die sich von der Acrylsäure durch Substitution in der 1- und/oder 2-Stellung und/oder an der Carboxylgruppe herleiten. Zur Haftschmelzkleberherstellung sind alle Derivate geeignet, die zu Homo- oder Copolymerisaten führen, die eine Glasübergangstemperatur unter -20°C besitzen. Bevorzugt sind Ester der Acrylsäure und Methacrylsäure, von denen beispielsweise Butyl-, n-Octyl-, Isooctyl-, 2-Ethylhexyl-, Nonyl- oder Isononylacrylat, Decyl- und Dodecylmethacrylat genannt seien.
In bestimmten Fällen, in denen besondere Eigenschaften des Haftklebematerials angestrebt werden, ist es vorteilhaft, wenn weitere radikalisch polymerisierbare Comonomere eingesetzt werden, wie z.B. Vinylacetat, Vinylpropionat, N-Vinylpyrrolidon, Vinylimidazol, Vinylidenchlorid, 4-Butylstyrol, Mono- oder Diester der Malein- und/oder Fumarsäure.

Die gewünschte Kohäsion von Haftschmelzklebern wird erfindungsgemäß mittels laserstrahleninduzierter Vernetzung erreicht. Um in den Haftschmelzkleber die für Laserstrahl-initiierte Vernetzung geeigneten Zentren einzubauen, ist der Einsatz von mindestens einem photopolymerisationsfähige Gruppen enthaltenden Comonomer notwendig. Diese Verbindungen sind in der Lage, UV-Strahlenenergie unter Bildung von Radikalen aufzunehmen und damit eine Vernetzungsreaktion zu starten. Vorzugsweise liegt der Gehalt an photopolymerisationsfähige Gruppen enthaltenden Comonomeren bei 0,05 - 20,0 Gew.%. Zur Durchführung der Erfindung ist es erforderlich, daß das photopolymerisationsfähige Gruppen enthaltende Comonomer bei der Emissionswellenlänge des benutzten Lasers ein Absorptionsvermögen besitzt, d.h. die Auswahl dieser Comonomeren muß in Abhängigkeit vom Lasertyp getroffen werden. Für den Wellenlängenbereich von 180-400 nm sind zahlreiche polymerisationsfähige Gruppen enthaltende Comonomere bekannt, die beispielsweise folgenden Gruppen angehören: Acetophenone, Benzophenone, Benzil-Derivate, Benzoin-Derivate, Dialkoxyacetophenone, Hydroxylalkylphenone, a-Acyloximester, a-Halogenketone, Thioxanthone, Fluore-non-Derivate, Anthrachinon-Derivate, Eisen-Aren-Komplexe, Dibenzosuberone und Michlers Keton.
Der Haftschmelzkleber kann ein oder mehrere weitere Hilfsmittel enthalten, die mit den übrigen Bestandteilen verträglich sind und die Wirksamkeit der Laserstrahlen nicht merklich beeinflussen. Hier kommen Weichmacher, Tackifier, Stabilisatoren, Füllstoffe, Mattierungsmittel, Pigmente und/oder Farbstoffe in Frage. Zur Durchführung des erfindungsgemäßen Verfahrens, das vorzugsweise kontinuierlich gestaltet wird, wird der fließfähige Haftschmelzkleber vollflächig oder auch musterförmig beispielsweise durch Rakeln, Rollen, Walzen oder mit Hilfe einer Düse auf einer Unterlage in der gewünschten Schichtdicke verteilt. Die Dicke der zu vernetzenden Schichten liegt dabei zwischen 3 und 3000 µm und vorzugsweise zwischen 30 und 1000 µm. Angestrebt werden insbesondere Leistungsdichten des eingesetzten Laser-Strahls auf der Haftschmelzkleberoberfläche von 0,02-350 mW/cm². Als Unterlage sind alle Flächengebilde geeignet, deren Oberfläche das Ablösen der gebildeten Haftkleberschicht erlaubt. Bei der Wahl des Materials der vorzugsweise bahnförmigen Unterlage kann beispielsweise auf Polymere wie Polyethylen, Polypropylen, Polyester und Polyamide oder auf Papier zurückgegriffen werden, wenn ihre Oberfläche zum Beispiel durch Siliconisierung klebstoffabweisend eingestellt sind. Daneben kann die Unterlage auch aus Metallen oder textilen Flächengebilden bestehen. Ohne besondere Behandlung sind auch Polytetrafluorethylen und Polyvinylchlorid geeignet. Die so erzeugte Schicht des Haftschmelzklebers wird dann der monochromatischen Strahlung des Lasers ausgesetzt, wobei die Unterlage und der Laserstrahl relativ zueinander verschiebbar sind. So kann der Laser-strahl beispielsweise durch Schwenkbewegungen senkrecht zur Fortbewegungsrichtung einer Unterlagenbahn die Vernetzung in der gesamten Fläche auslösen. Die dem Laser eigene punktförmige Konzentration seiner Strahlungsenergie erfordert bei einem örtlich fixierten Laserstrahl und einer sich darunter hinwegbewegenden Unterlagenbahn besondere Verfahrensmaßnahmen. Sie bestehen in der Anbringung optischer Vorrichtungen in dem Laserstrahl, durch die in mindestens einer Richtung eine Aufspreizung des Laserstrahles bevorzugt senkrecht zur Bewegungsrichtung der Unterlagenbahn bewirkt wird. Natürlich hat diese Aufspreizung eine Reduktion der Energiedichte in der bestrahlten Fläche zur Folge, doch wurden aufgrund der hohen Energie des Primärstrahls, was ja eine der besonderen Eigenschaften der Laser darstellt, die für die Vernetzungsauslösung notwendigen Leistungsdichten von 0,2 bis 5 mW/cm² selbst bei hohen Spreizungswinkeln noch erreicht. Anzumerken ist, daß die Bestrahlung bei Zimmertemperatur erfolgt. Natürlich kann die Temperatur auch davon abweichen, was aber keine besonderen Vorteile bringt. Im Zuge der Vernetzung kommt es selbstverständlich nur zu einer geringfügigen Erwärmung der bestrahlten Schicht, da die bei den UV-Lampen üblichen IR-Strahlungsanteile fehlen.

Besondere Beachtung ist allerdings dem Sauerstoffgehalt der Luft zu schenken, da das Sauerstoffmolekül bekanntermaßen mit Radikalen in einer Geschwindigkeit reagiert, die je nach Monomer 10.000 bis 1.000.000-mal schneller ist als die eigentliche radikalische Vernetzungsreaktion. Außerdem absorbiert der Sauerstoff UV-Strahlen unterhalb von 200 nm. Der Ausschluß von Sauerstoff durch Wahl einer inerten Atmosphäre, wie z.B. Stickstoff, oder durch Vakuum ist daher immer dann angezeigt, wenn kurze Reaktionszeiten angestrebt werden oder die Bestrahlung bei einer Wellenlänge unterhalb 200 nm durchgeführt werden soll. Ein brauchbarer Schutz in dieser Richtung kann auch durch Abdeckung des zu bestrahlenden Substrats mit einer UV-durchlässigen Folie erreicht werden.

Bei einer bevorzugten Realisierung des erfindungsgemäßen Verfahrens ist die Unterlage bahnförmig ausgelegt, so daß die mögliche Bahngeschwindigkeit den Umfang des in der Zeiteinheit produzierten Haftklebematerials festlegt. Die Bahngeschwindigkeit ist von einer Reihe von Parametern abhängig, von denen die Zusammensetzung des Haftschmelzklebers, die Schichtdicke des Haftschmelzklebers und die Bestrahlungszeit den größten Einfluß haben. Da mit den gepulsten Lasern wirksame Bestrahlungszeiten unter einer Sekunde möglich sind, andererseits dicke Schichten zur Vernetzung längere Bestrahlungszeiten benötigen, liegen die Zeiten bei dem erfindungsgemäßen Verfahren bei 0,01 bis 2 Sekunden mit einem bevorzugten Bereich zwischen 0,1 und 1 Sekunde. Die produktionsmäßig für die kontinuierliche Fahrweise interessantesten Bestrahlungszeiten liegen unter 1 Sekunde, da sich dann Bahngeschwindigkeiten im Meter-Bereich ergeben. Nicht zuletzt besteht die Möglichkeit zur Erhöhung dieser Geschwindigkeiten durch gleichzeitigen Einsatz mehrerer Laser, die dieselbe oder auch verschiedene Emissionswellenlängen aufweisen. Ist die schichtförmige Zubereitung auf einer Unterlage verteilt, die für UV-Strahlen durchlässig ist, so kann die Bestrahlung auch von der Unterseite der Unterlage her erfolgen, wozu der Laserstrahl mit Hilfe einer Glasfaseroptik in die geeignete Position gebracht werden kann. Diese Bestrahlung kann vor, während oder nach dem Vernetzungsprozeß auf der Oberseite erfolgen. Besondere Vorteile dieser Verfahrensvarianten liegen bei der Herstellung von sehr dicken Haftkleberschichten.

Bei der Wahl der Verfahrensparameter sind einige Grundregeln zu beachten, um das gewünschte Resultat zu erzielen:
Je kürzer die Emissionswellenlänge des Lasers, umso größer die Vernetzungsgeschwindigkeit.
Je größer die Anzahl der Pulse des Lasers, umso höher der Umsatz der Vernetzungsreaktion.
Je höher die Pulsfolgefrequenz, d.h. je größer die zeitlichen Intervalle zwischen den Pulsen, umso geringer der Umsatz der Vernetzungsreaktion.

Nach Abschluß der Vernetzungsreaktion wird das entstandene flächige Haftklebematerial in dem Falle, wo die Unterlage ein umlaufendes endloses Förderband ist, von diesem auf eine andere wieder ablösbare Unterlage transferiert und der gewünschten Konfektionierung zu zum Beispiel Streifen (Bänder) oder Abschnitten zugeführt. Die Streifen können in sich gewickelt werden, wenn die Unterseite der Unterlage auch kleberabweisend ausgerüstet ist. Anderenfalls muß eine kleberabweisend ausgerüstete Abdecklage eingesetzt werden. Analoge Betrachtungen gelten auch für die Handhabung von Abschnitten des Haftklebematerials. In dem Fall, wo die Unterlage während der Polymerisation auch die Unterlage bei der weiteren Verarbeitung bildet, entfällt der oben genannte Transferschritt.

Die vorliegende Erfindung ist in der Haftkleberindustrie oder irgend einer anderen Industrie zur Versiegelung, Befestigung oder zu anderen Zwecken anwendbar, so z.B. zur Befestigung von Karosserieformteilen und Zierleisten an der Fahrzeugkarosserie, wodurch die übliche zur Befestigung notwendige Perforation der Karosserie vermieden wird.

Die Erfindung wird anhand der folgenden Beispiele weiter erläutert. In allen Beispielen kommt der Excimer-Laser Typ LPX 210 (LAMBDA-Physik) mit folgenden Kenngrößen zum Einsatz:

| | |
|---|---|
| Emissionswellenlänge | 351 nm |
| Maximale Durchschnittsleistung | 28 W |
| Maximale Pulsenergie | 320 mJ |
| Pulsdauer | 30 ns |
| Maximale Pulsfolgefrequenz | 100 Hz |

Alle Prozentangaben bedeuten Gew.-%.

### Beispiel 1

Eine lösemittelfreie Haftklebemasse aus 90 % 2-Ethylhexylacrylat, 7 % Acrylsäure und 3 % Phenyl-(1-acryloyloxy)-cyclohexylketon wurde aus der Schmelze mit drei verschiedenen Schichtstärken von 138 g/m², 552 g/m² und 1104 g/m² auf eine PES-Folie aufgetragen und mit einem Excimer-Laser mit vier unterschiedlichen Bestrahlungszeiten 1,2 s, 0,8 s, 0,4 s und 0,12 s behandelt. Die Leistungsdichte des Laserstrahlers beträgt 30 mW · cm⁻².

Um die Wirksamkeit der Laser-Vernetzung mit UV-Vernetzung zu vergleichen, wurden Muster mit gleicher Schichtstärke mit einer UV-Lampe Uvaspot 400 T (Leistung 500 W) 2 s, 15 s und 30 s mit einem Abstand zum bestrahlten Objekt von 12 cm behandelt.

Die Ausprüfung der mittels Laser- und UV-Strahlen vernetzten Haftklebeschichten umfaßte Klebkraft (nach AFERA 4001) und Scherfestigkeit (nach AFERA 4015).

Die Prüfergebnisse wurden in den Tabellen 1 und 2 zusammengestellt.

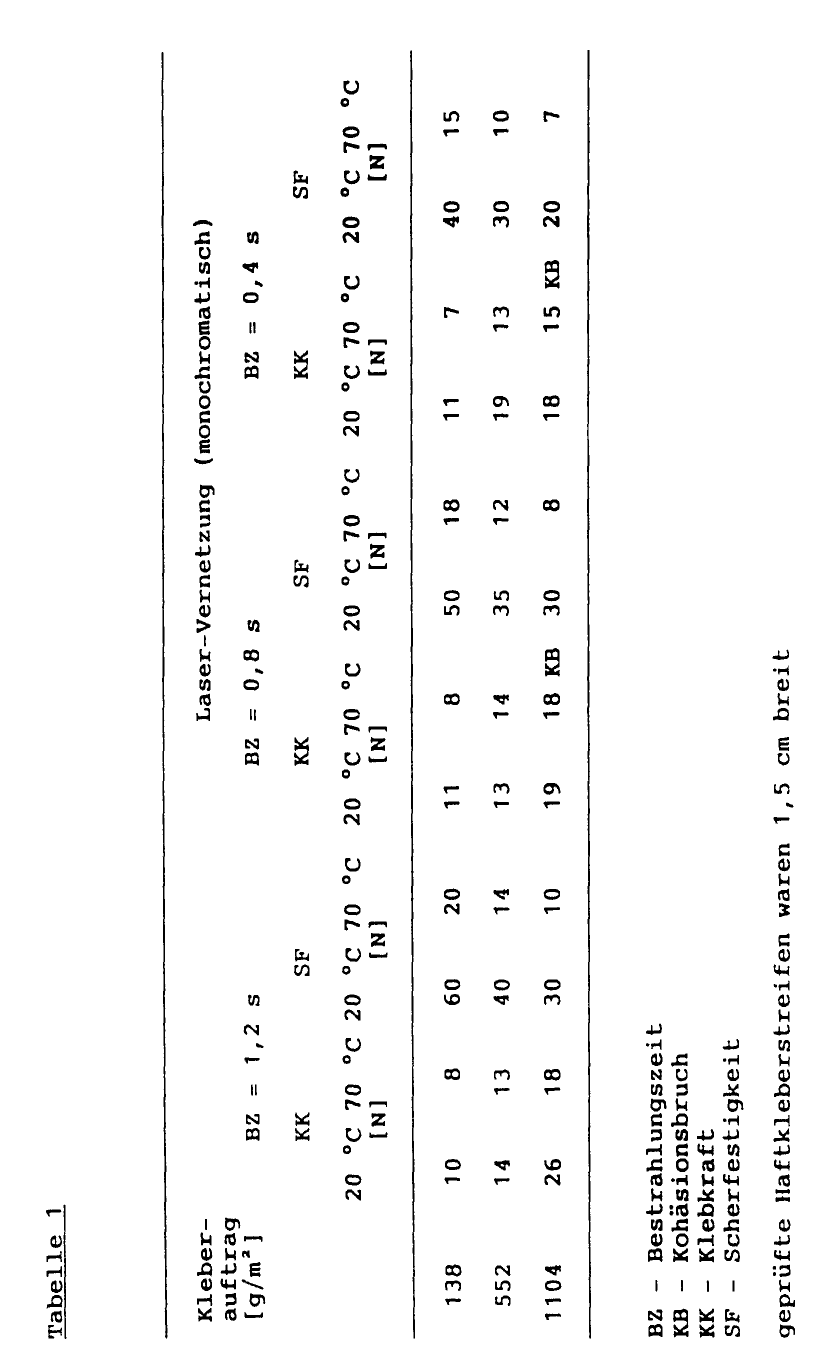

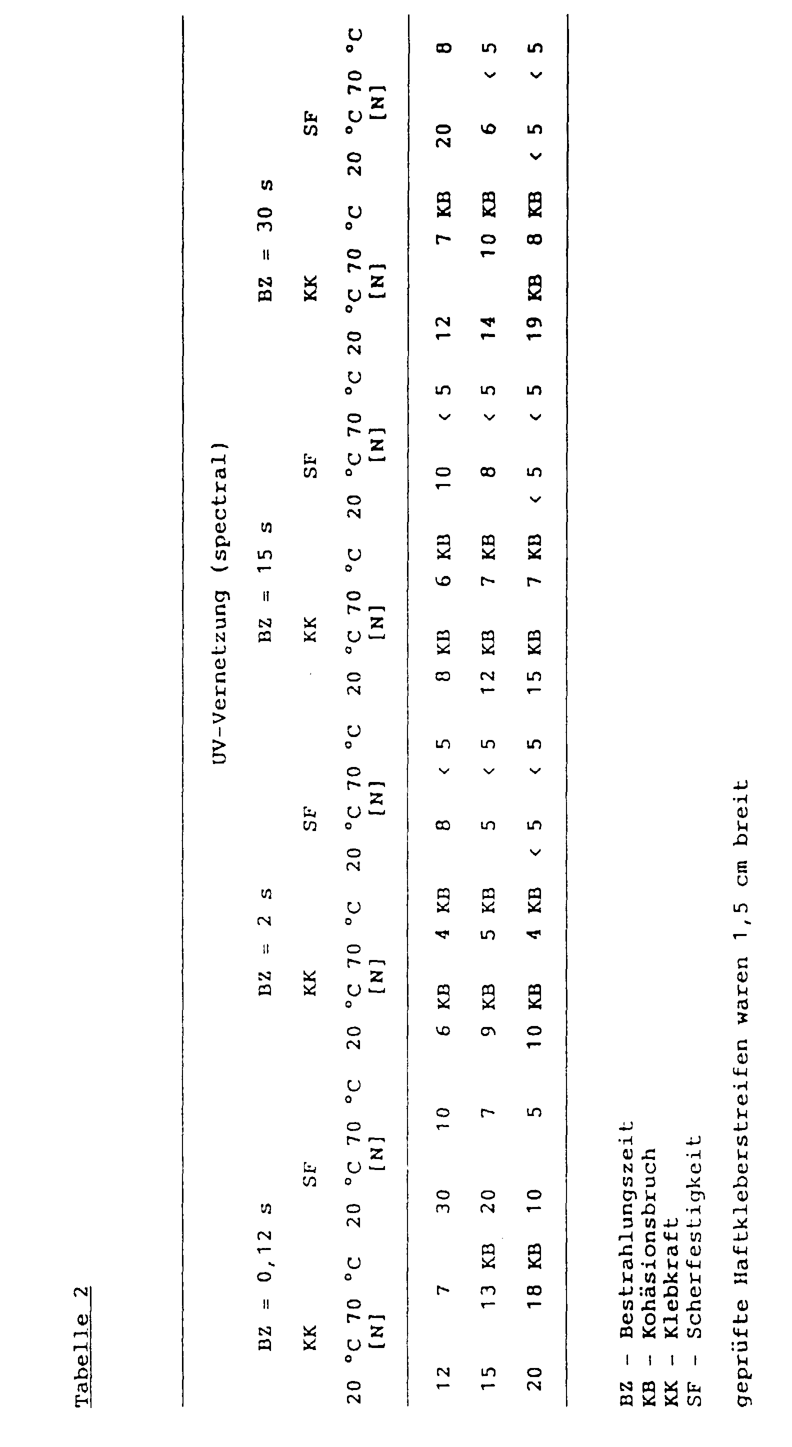

### Beispiele 2 bis 15

Diverse Haftschmelzkleber auf Polyacrylatbasis (genaue Zusammensetzungen werden in der Tabelle 3 dargestellt) werden mit einer Schichtdicke von 800 µm (ca. 800 g/m²) auf eine 60 µm dicke Polyesterfolie aufgetragen und mit dem Excimer-Laser mit einer Bestrahlungszeit von 0,5 s behandelt. Die Leistungsdichte des Laserstrahlers beträgt 30 mW · cm⁻². Um die Wirksamkeit der UV-Vernetzung zu testen, wurden gleiche Muster der UV-Strahlung einer UV-Lampe Uvaspot 400 T (Leistung 500 W) 30 s lang ausgesetzt. Der Abstand zwischen UV-Lampe und der bestrahlten Haftkleberschicht betrug 12 cm. Die ermittelten Werte der Klebkraft und der Scherfestigkeit wurden in der Tabelle 4 zusammengefaßt.

### Abkürzungsverzeichnis :

- 2-EHA -: 2-Ethylhexylacrylat
- BuA -: Butylacrylat
- IOA -: Isooctylacrylat
- AcS -: Acrylsäure
- MAcS -: Methacrylsäure
- AcAm -: Acrylamid
- 2-HEA -: 2-Hydroxyethylacrylat
- VA -: Vinylacetat
- PAC -: Phenyl-(1-acryloyloxy)-cyclohexylketon
- AAP -: o-Acryloyloxyacetophenon
- ZLI 3331 -: 4(2-Acryloylethoxy)-phenyl-(2-hydroxy-2-propyl)-keton

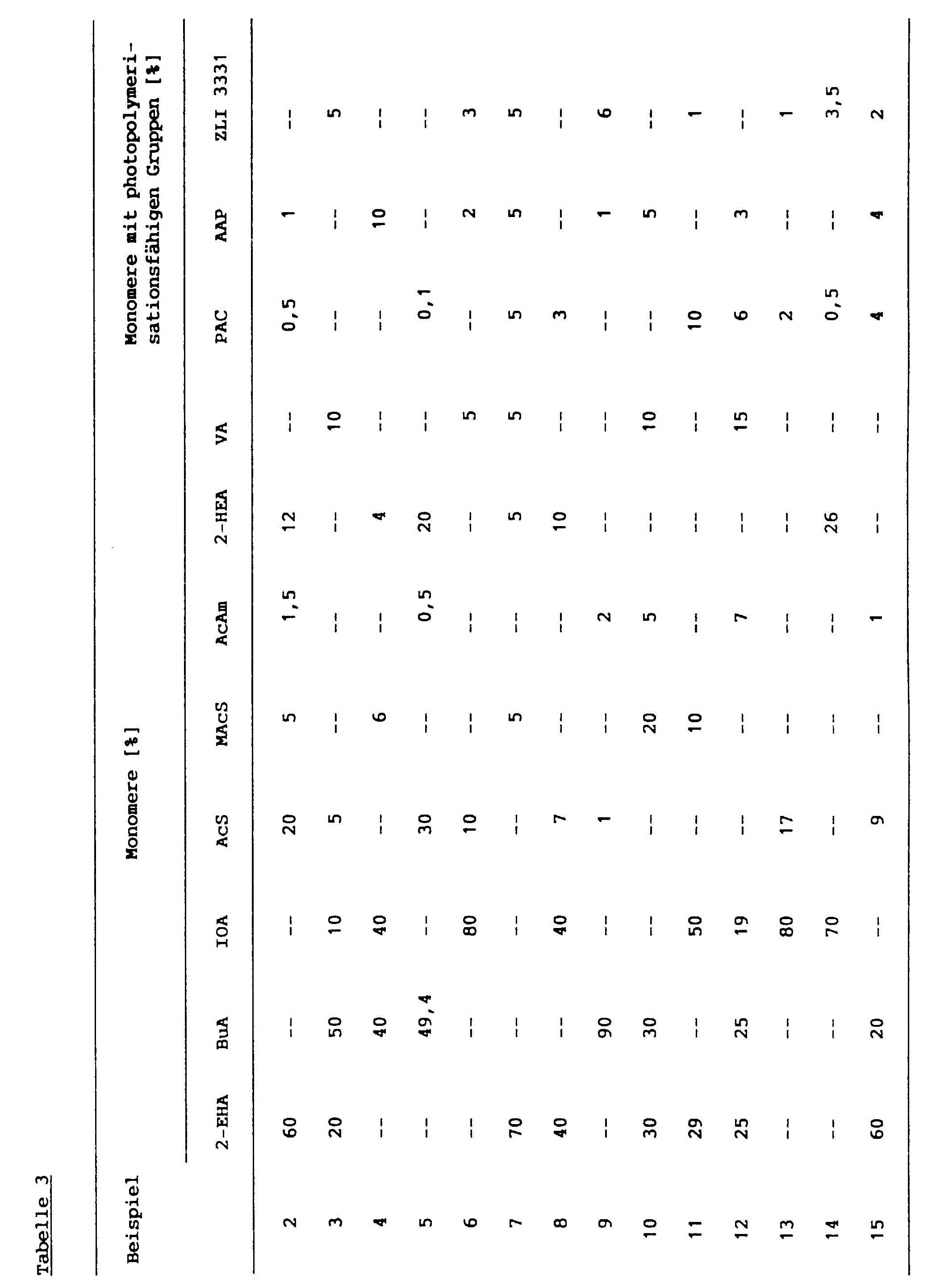

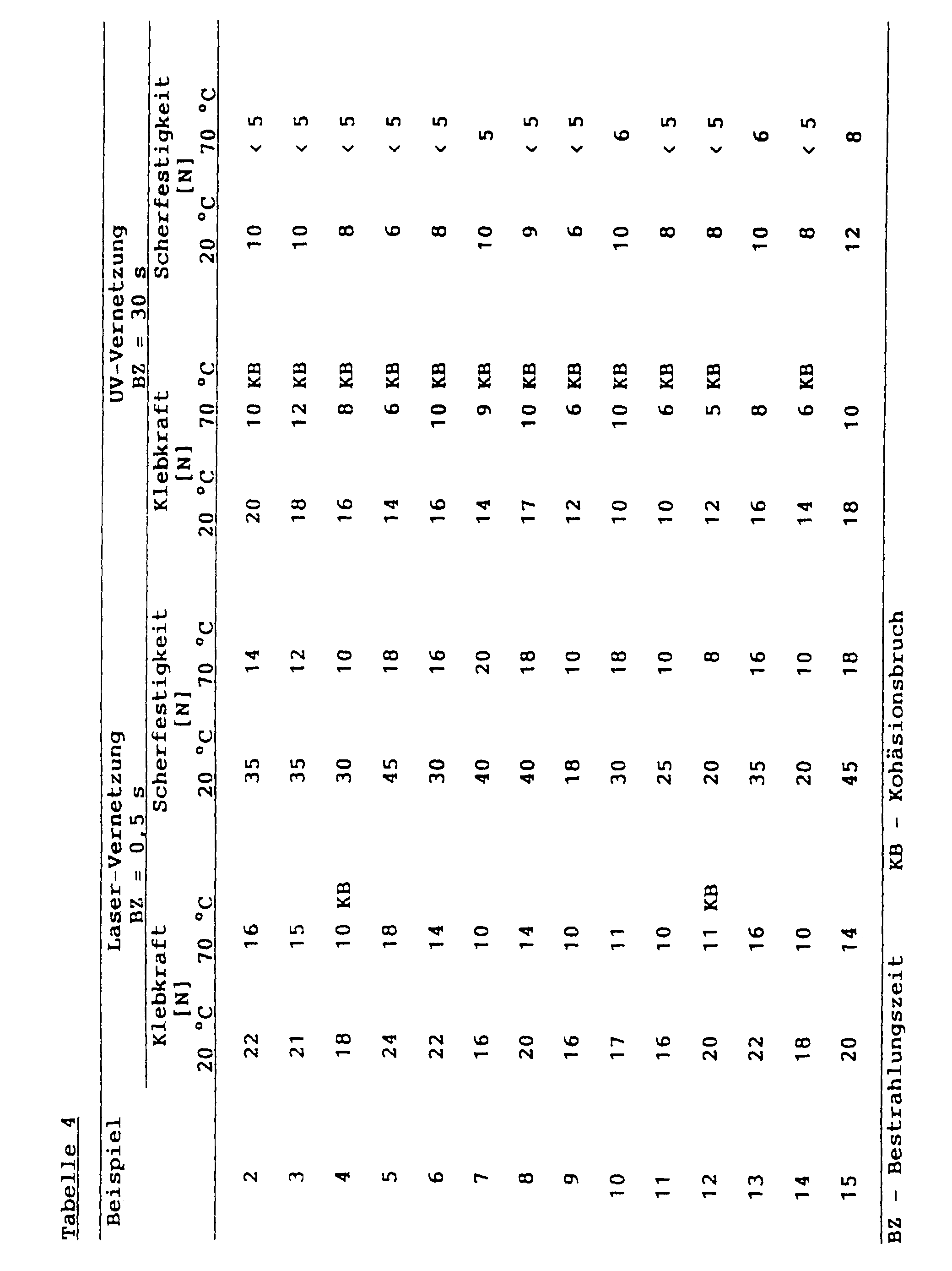

Wie aus den in den Tabellen 1 und 3 dargestellten Werten hervorgeht, ist eine laserstrahleninitiierte Vernetzung bezüglich der Kohäsion und Klebkraft der bestrahlten Haftschmelzkleberschichten bedeutend effizienter als mittels UV-Lampen initiierte Vernetzung. Die mit Laserstrahlen initiierte Vernetzungsreaktion läuft mindestens um Faktor 100-500 schneller als die konventionelle UV-Vernetzung ab. Andere Vorteile der Laservernetzung sind minimal auftretende Wärmebelastung (keine IR-Anteile) der bestrahlten Muster zu sehen.

## Patentansprüche

1. Verfahren zur Vernetzung von Haftschmelzklebern in flächiger Verteilung mittels radikalischer Reaktion von eingebauten photopolymerisationsfähigen Gruppen mit Hilfe von Ultraviolett-Strahlen im Bereich 180-400 nm, dadurch gekennzeichnet, daß die zur Vernetzungsreaktion erforderliche Energie durch monochromatische Strahlung eines Lasers zugeführt wird.

2. Verfahren nach Anspruch 1, dadurch gekennzeichnet, daß Haftschmelzkleber auf Acrylatbasis eingesetzt werden.

3. Verfahren nach Ansprüchen 1 oder 2, dadurch gekennzeichnet, daß Haftschmelzkleber mit einem Gehalt an photopolymerisationsfähige Gruppen enthaltenden Comonomeren eingesetzt werden.

4. Verfahren nach Anspruch 3, dadurch gekennzeichnet, daß der Gehalt an photopolymerisationsfähige Gruppen enthaltenden Comonomeren 0,05-20,0 Gew.-% beträgt.

5. Verfahren nach Ansprüchen 1 bis 4, dadurch gekennzeichnet, daß die Haftschmelzkleber lösemittelfrei sind.

6. Verfahren nach Ansprüchen 1 bis 5, dadurch gekennzeichnet, daß zur Vernetzung ein Excimer-Laser eingesetzt wird.

7. Verfahren nach Ansprüchen 1 bis 5, dadurch gekennzeichnet, daß zur Vernetzung ein Festkörper-Laser eingesetzt wird.

8. Verfahren nach einem oder mehreren der vorangehenden Ansprüche, dadurch gekennzeichnet, daß die Haftschmelzkleber ein oder mehrere mit den Haftschmelzklebern verträgliche und die Wirksamkeit der Laserstrahlen nicht merklich beeinflussende Hilfsmittel enthalten.

9. Verfahren nach Anspruch 8, dadurch gekennzeichnet, daß die Hilfsmittel aus der Gruppe bestehend aus Tackifiern, Weichmachern, Füllstoffen, Mattierungsmitteln, Pigmenten und Farbstoffen ausgewählt werden.

10. Verfahren nach einem oder mehreren der vorangehenden Ansprüche, dadurch gekennzeichnet, daß der zur Vernetzung eingesetzte Laser-Strahl auf der Haftschmelzkleberfläche eine Leistungsdichte von 0,2-350 mW/cm² erzeugt.

11. Verfahren nach einem oder mehreren der vorangehenden Ansprüche, dadurch gekennzeichnet, daß die mittels Laserstrahlen vernetzte Haftschmelzkleberschicht eine Dicke von 3-3000 µm aufweist.

12. Verfahren nach einem oder mehreren der vorangehenden Ansprüche, dadurch gekennzeichnet, daß die Dauer der Laserbestrahlung im Bereich 0,01 bis 2 Sekunden liegt.

13. Verfahren nach Anspruch 12, dadurch gekennzeichnet, daß die Dauer der Laserbestrahlung im Bereich von 0,01 bis 1 Sekunde liegt.

14. Verfahren nach einem oder mehreren der vorangehenden Ansprüche, dadurch gekennzeichnet, daß der zur Vernetzung eingesetzte Laserstrahl in mindestens einer Richtung aufgespreizt ist.

15. Verfahren nach einem oder mehreren der vorangehenden Ansprüche, dadurch gekennzeichnet, daß es kontinuierlich durchgeführt wird.

16. Verfahren nach einem oder mehreren der vorangehenden Ansprüche, dadurch gekennzeichnet, daß zur Durchführung der Vernetzungsreaktion mehrere Laser gleichzeitig oder nacheinander eingesetzt werden.

17. Verfahren nach Anspruch 16, dadurch gekennzeichnet, daß die Laser dieselben oder verschiedene Emissionswellenlängen aufweisen.

18. Verfahren nach Anspruch 1, dadurch gekennzeichnet, daß die Laser-Bestrahlung der HaftschmelzkleberSchicht unter Ausschluß von Sauerstoff erfolgt.

19. Verwendung der mittels Laserstrahlen vernetzten Haftschmelzklebstoffe gemäß einem oder mehreren der Ansprüche 1 bis 17 zur Herstellung von selbstklebenden Hochleistungsartikeln.

## Claims

1. Process for the cross-linking of pressure-sensitive hot-melt adhesives in sheet-like distribution by means of the radical reaction of incorporated photopolymerizable groups with the help of ultraviolet rays in the range of 180 to 400 nm, characterized in that the energy which is required for the cross-linking reaction is supplied by the monochromatic radiation of a laser.

2. The process according to claim 1, characterized in that acrylate-based pressure-sensitive hot-melt adhesives are employed.

3. The process according to claim 1 or 2, characterized in that pressure-sensitive hot-melt adhesives with a content of comonomers containing photopolymerizable groups are used.

4. The process according to claim 3, characterized in that the content of comonomers containing photopolymerizable groups amounts to 0.05 - 20.0%-wt.

5. The process according to claims 1 to 4, characterized in that the pressure-sensitive hot-melt adhesives are free of solvents.

6. The process according to claims 1 to 5, characterized in that for cross-linking an Excimer laser is used.

7. The process according to claims 1 to 5, characterized in that a solid laser is used for cross-linking.

8. The process according to one or more of the preceding claims, characterized in that the pressure-sensitive hot-melt adhesives contain one or more auxiliary agents which are compatible with the pressure-sensitive hot-melt adhesives and do not perceivably influence the effectiveness of the laser rays.

9. The process according to claim 8, characterized in that the auxiliary agents are selected from the group consisting of tackifiers, plasticizers, fillers, delusterants, pigments and dyestuffs.

10. The process according to one or more of the preceding claims, characterized in that the laser beam used for cross-linking creates a lumination of 0.2 - 350 mW/cm² on the surface of the pressure-sensitive hot-melt adhesive.

11. The process according to one or more of the preceding claims, characterized in that the pressure-sensitive hot-melt adhesive layer which has been cross-linked by laser rays has a thickness of 3 - 3000 µm.

12. The process according to one or more of the preceding claims, characterized in that the duration of exposure to laser radiation is in the range from 0.01 to 2 seconds.

13. The process according to claim 12, characterized in that the duration of exposure to laser radiation is in the range from 0.01 to 1 second.

14. The process according to one or more of the preceding claims, characterized in that the laser beam which is used for cross-linking is spread out in at least one direction.

15. The process according to one or more of the preceding claims, characterized in that said process is carried out continuously.

16. The process according to one or more of the preceding claims, characterized in that for performing the cross-linking reaction, several lasers are employed simultaneously or consecutively.

17. The process according to claim 16, characterized in that the lasers exhibit the same or different emission wavelengths.

18. The process according to claim 1, characterized in that the laser irradiation of the pressure-sensitive hot-melt adhesive layer is performed under exclusion of oxygen.

19. The use of the pressure-sensitive hot-melt adhesives according to one or more of claims 1 to 17 for the production of self-adhesive high-performance articles.

## Revendications

1. Procédé de réticulation de colles de contact fusibles sous forme étalée au moyen d'une réaction radicalaire de groupes incorporés aptes à la photopolymérisation à l'aide de rayons ultraviolets dans la gamme de 180 à 400 nm, caractérisé en ce que l'énergie nécessaire à la réaction de réticulation est fournie par le rayonnement monochromatique d'un laser.

2. Procédé selon la revendication 1, caractérisé en ce qu'on utilise des colles de contact fusibles à base d'acrylates.

3. Procédé selon les revendications 1 ou 2, caractérisé en ce qu'on utilise des colles de contact fusibles avec une teneur en comonomères contenant des groupes aptes à la photopolymérisation.

4. Procédé selon la revendication 3, caractérisé en ce que la teneur en comonomères contenant des groupes aptes à la photopolymérisation s'élève à 0,05 à 20,0 % en poids.

5. Procédé selon les revendications 1 à 4, caractérisé en ce que les colles de contact fusibles sont exemptes de solvants.

6. Procédé selon les revendications 1 à 5, caractérisé en ce qu'on utilise pour la réticulation un laser à excimère.

7. Procédé selon les revendications 1 à 5, caractérisé en ce qu'on utilise pour la réticulation un laser à corps solide.

8. Procédé selon une ou plusieurs des revendications précédentes, caractérisé en ce que les colles de contact fusibles contiennent un ou plusieurs adjuvants compatibles avec les colles de contact fusibles et n'influençant pas de façon significative l'efficacité des rayons laser.

9. Procédé selon la revendication 8, caractérisé en ce que les adjuvants sont choisis dans le groupe constitué des agents adhésifs, des plastifiants, des matières de charge, des agents de dépolissage, des pigments et des colorants.

10. Procédé selon une ou plusieurs des revendications précédentes, caractérisé en ce que le rayon laser utilisé pour la réticulation produit une puissance volumique de 0,2 à 350 mW/cm² sur la surface de la colle de contact fusible.

11. Procédé selon une ou plusieurs des revendications précédentes, caractérisé en ce que la couche de colle de contact fusible, réticulée à l'aide de rayons laser, présente une épaisseur de 3 à 3.000 µm.

12. Procédé selon une ou plusieurs des revendications précédentes, caractérisé en ce que la durée de l'irradiation laser se situe dans la gamme de 0,01 à 2 secondes.

13. Procédé selon la revendication 12, caractérisé en ce que la durée de l'irradiation laser se situe dans la gamme de 0,01 à 1 seconde.

14. Procédé selon une ou plusieurs des revendications précédentes, caractérisé en ce que le rayon laser utilisé pour la réticulation est étalé en au moins une direction.

15. Procédé selon une ou plusieurs des revendications précédentes, caractérisé en ce qu'il est effectué de manière continue.

16. Procédé selon une ou plusieurs des revendications précédentes, caractérisé en ce que pour la réalisation de la réaction de réticulation, on utilise plusieurs lasers simultanément ou successivement.

17. Procédé selon la revendication 16, caractérisé en ce que les lasers présentent des longueurs d'onde d'émission identiques ou différentes.

18. Procédé selon la revendication 1, caractérisé en ce que l'irradiation laser de la couche de colle de contact fusible est effectuée à l'abri de l'oxygène.

19. Utilisation des colles de contact fusibles réticulées au moyen de rayons laser selon une ou plusieurs des revendications 1 à 17 pour la production d'articles auto-adhésifs très performants.
